# EUROPEAN PATENT APPLICATION

(11) **EP 3 910 758 A1**
(43) Date of publication of application: **17.11.2021**
(21) Application number: 19909546.4
(22) Date of filing: 18.12.2019
(51) Int. Cl.: H02K 1/14, H02K 7/00, H02K 1/27

(54) **MOTOR**

(30) Priority: 08.01.2019 KR 20190002261
(71) Applicant: LG Innotek Co., Ltd., Seoul 07796 (KR)
(72) Inventor: PYEON, Jin Su, Seoul 07796 (KR)
(74) Representative: M. Zardi & Co S.A.
(86) International application number: PCT/KR2019/017930
(87) International publication number: WO 2020/145538

(57) **Abstract**

An embodiment provides a motor comprising a shaft, a rotor to which the shaft is coupled, and a stator disposed on the outer side of the rotor, wherein the stator includes a stator core and coils wound around the stator core, the stator core includes a yoke, a tooth protruding from the yoke, and a first groove and a second groove formed on the inner surface of the tooth, and distances to the first groove and the second groove around the center of the tooth in a circumferential direction are different from each other. Therefore, the motor can reduce cogging torque through the design of the grooves arranged to be asymmetrical around the center of the tooth.

## Description

### [Technical Field]

An embodiment relates to a motor.

### [Background Art]

Motors are apparatuses configured to convert electrical energy to mechanical energy to obtain rotational forces and are widely used for vehicles, home appliances, industrial machines, and the like.

Particularly, in an electronic power steering (EPS) system in which the motor is used, an electronic control unit (ECU) drives the motor according to operating conditions to secure turning stability and provide a rapid restoring force. Accordingly, a driver of the vehicle can travel safely.

The motor includes a stator and a rotor. The stator may include teeth which form a plurality of slots, and the rotor may include a plurality of magnets disposed to face the teeth. Among the teeth, the adjacent teeth are disposed to be spaced apart from each other to form slot opens.

In this case, a cogging torque may be generated due to a difference in magnetic permeability between the stator formed of a metal, and the slot opens, which are empty spaces, when the rotor rotates. Since such a cogging torque is a cause of noise and vibration, reduction of the cogging torque is most important in improving quality of the motor.

However, since the performance and quality of the motor can differ according to a shape and an arrangement position of a groove formed in the tooth, a motor in which a cogging torque is decreased and the performance is also maintained is required through designing the groove.

### [Technical Problem]

The present invention is directed to providing a motor in which a hole is formed in a cover disposed to cover an opening of a housing and a sensor is disposed in the hole to secure a predetermined distance between the sensor and a sensing magnet so that sensing performance is secured and a size is reduced in an axial direction.

The present invention is directed to providing a motor in which a cap formed to have a predetermined thickness is formed to have an elastic structure capable of elastically supporting a rotor core so that generation of a gap is prevented between the caps and stiffness is secured regardless of an assembly tolerance.

Objectives to be solved by the present invention are not limited to the above-described objectives, and other objectives which are not described above will be clearly understood by those skilled in the art from the following specification.

### [Technical Solution]

One aspect of the present invention provides a motor including a shaft, a rotor to which the shaft is coupled, and a stator disposed outside the rotor, wherein the stator includes a stator core and a coil wound around the stator core, the stator core includes a yoke, a tooth formed to protrude from the yoke, and a first groove and a second groove which are formed in an inner surface of the tooth, and a separation distance from a center of the tooth in a circumferential direction to the first groove and a separation distance from the center of the tooth to the second groove are different from each other. That is, the inner surface of the tooth is viewed in a radial direction, and the separation distance from the center of the tooth in a circumferential direction to the first groove may be different from the separation distance from the center of the tooth in the circumferential direction to the second groove.

About an axis of the shaft, a first angle (θ1) formed by a virtual line (L), which connects a center of the inner surface of the tooth and the axis of the shaft, and the inner surface of the tooth at which one side of the first groove is formed may be different from a second angle (θ2) formed by the line (L) and the inner surface of the tooth at which the other side of the second groove is formed.

The first groove and the second groove may be formed in an axial direction of the shaft.

About the axis of the shaft, a fourth angle (θ4) formed by one side of the inner surface of the tooth and the inner surface of the tooth at which one side of the second groove is formed may be two times the second angle (θ2).

A second distance (D2) from the virtual line (L), which connects the center of the inner surface of the tooth and the axis of the shaft, to the other side of the second groove may be 1.578 times a depth (D) of the second groove, and a difference between the first angle (θ1) and the second angle (θ2) may be within 10% of the second angle (θ2). In this case, the first angle (θ1) may be a sum of the second angle (θ2) and an angle which is within 10% of the second angle (θ2), or the first angle (θ1) may be a difference between the second angle (θ2) and an angle which is within 5% of the second angle (θ2).

A second distance (D2) from the virtual line (L), which connects the center of the inner surface of the tooth and the axis of the shaft, to the other side of the second groove may be 1.315 times a depth (D) of the second groove, and a difference between the first angle (θ1) and the second angle (θ2) may be within 5% of the second angle (θ2). In this case, the first angle (θ1) may be a sum of the second angle (θ2) and an angle which is within 4% of the second angle (θ2), or the first angle (θ1) may be a difference between the second angle (θ2) and an angle which is within 5% of the second angle (θ2).

Another aspect of the present invention provides a motor including a shaft, a rotor to which the shaft is coupled; and a stator disposed outside the rotor, wherein the stator includes a stator core and a coil wound around the stator core, the stator core includes a yoke, a tooth formed to protrude from the yoke, and a first groove and a second groove which are formed in an inner surface of the tooth, and about an axis of the shaft, a fifth angle (θ5) formed by one side of the first groove and the inner surface of the tooth at which the other side of the second groove is formed may be different from a third angle (θ3) formed by the other side of the first groove and the inner surface of the tooth at which the other side of the tooth is formed and a fourth angle (θ4) formed by one side of the second groove and the inner surface of the tooth at which one side of the inner surface of the tooth is formed.

The third angle (θ3) and the fourth angle (θ4) may be different from each other.

The fifth angle (θ5) may be greater or smaller than the fourth angle (θ4).

In a case in which the fifth angle (θ5) is greater than the fourth angle (θ4), the fourth angle (θ4) may be greater than the third angle (θ3), and in a case in which the fifth angle (θ5) is smaller than the fourth angle (θ4), the fourth angle (θ4) may be smaller than the third angle (θ3).

The fifth angle (θ5) may be a sum of a first angle (θ1) formed by a virtual line (L), which connects a center of the inner surface of the tooth and the axis of the shaft, and the inner surface of the tooth at which the one side of the first groove is formed and a second angle (θ2) formed by the line (L) and the inner surface of the tooth at which the other side of the second groove is formed.

The first angle (θ1) and the second angle (θ2) may be different from each other.

A second distance (D2) from the virtual line (L), which connects the center of the inner surface of the tooth and the axis of the shaft, to the other side of the second groove may be 1.578 times a depth (D) of the second groove, and the fourth angle (θ4) may be a sum of the third angle (θ3) and an angle which is within 10% of the second angle (θ2), or the fourth angle (θ4) may be a difference between the third angle (θ3) and an angle which is within 5% of the second angle (θ2).

A second distance (D2) from the virtual line (L), which connects the center of the inner surface of the tooth and the axis of the shaft, to the other side of the second groove may be 1.315 times a depth (D) of the second groove, and the fourth angle (θ4) may be a sum of the third angle (θ3) and an angle which is within 4% of the second angle (θ2), or the fourth angle (θ4) may be a difference between the third angle (θ3) and an angle which is within 5% of the second angle (θ2).

A second distance (D2) from a virtual line (L), which connects a center of the inner surface of the tooth and the axis of the shaft, to the other side of the second groove may be 1.578 times a depth (D) of the second groove, and a difference between the fourth angle (θ4) and the third angle (θ3) may be within 5% of the fourth angle (θ4).

A second distance (D2) from the virtual line (L), which connects the center of the inner surface of the tooth and the axis of the shaft, to the other side of the second groove may be 1.315 times a depth (D) of the second groove, and a difference between the fourth angle (θ4) and the third angle (θ3) may be within 2.5% of the fourth angle (θ4).

A size of the first groove may be the same as a size of the second groove.

A ratio of a depth (D) to a width (W) of the first groove in a circumferential direction may be in the range of 0.24 to 0.29.

The inner surface may be formed to have a predetermined curvature (1/R) about the axis of the motor.

In the motor, a magnet of the rotor may be provided as eight magnets, and the tooth of the stator may be provided as 12 teeth.

A second distance (D2) from a virtual line (L), which connects a center of the inner surface of the tooth and an axis of the shaft, to the other side of the second groove may be 1.315 to 1.9725 times a depth (D) of the second groove.

### [Advantageous Effects]

According to embodiments, in a motor having the above-described structure, a cogging torque can be decreased through a design of grooves which are asymmetrically disposed with respect to a center of a tooth. Accordingly, quality of the motor can be improved.

In the motor, the cogging torque can be decreased through a layout of at least two grooves which are asymmetrically disposed. In this case, in the motor, a design reference for the cogging torque can be proposed by defining a depth of the groove in relation to a separation distance of the grooves disposed to be spaced apart from the center of the tooth.

Various useful advantages and effects of the embodiments are not limited to the above-described contents and will be more easily understood from descriptions of the specific embodiments.

### [Description of Drawings]

FIG. 1 is a view illustrating a motor according to an embodiment.
FIG. 2 is a cross-sectional view illustrating the motor according to the embodiment.
FIG. 3 is a view illustrating a stator core of the motor according to the embodiment.
FIG. 4 is an enlarged view illustrating a region A of FIG. 3.
FIG. 5 is a view illustrating a unit stator core of the motor according to the embodiment.
FIG. 6 is a table showing a cogging torque of the motor and a change in the torque in a case in which a second distance of a second groove is 1.578 times a depth of the second groove of the motor according to the embodiment.
FIG. 7 is a graph showing the cogging torque of the motor in the case in which the second distance of the second groove is 1.578 times the depth of the second groove of the motor according to the embodiment.
FIG. 8 is a view illustrating a cogging torque waveform of a motor of a comparative example.
FIG. 9 is a view illustrating a cogging torque waveform of the motor in the case in which the second distance of the second groove is 1.578 times the depth of the second groove of the motor according to the embodiment.
FIG. 10 is a table showing a cogging torque of the motor and a change in the torque in a case in which the second distance of the second groove is 1.315 times the depth of the second groove of the motor according to the embodiment.
FIG. 11 is a graph showing the cogging torque of the motor in the case in which the second distance of the second groove is 1.315 times the depth of the second groove of the motor according to the embodiment.
FIG. 12 is a view illustrating a cogging torque waveform of a motor of a comparative example.
FIG. 13 is a view illustrating a cogging torque waveform of the motor in the case in which the second distance of the second groove is 1.315 times the depth of the second groove of the motor according to the embodiment.
FIG. 14 is a table showing a cogging torque of the motor and a change in the torque in a case in which the second distance of the second groove is 1.9725 times the depth of the second groove of the motor according to the embodiment.
FIG. 15 is a graph showing the cogging torque of the motor in the case in which the second distance of the second groove is 1.9725 times the depth of the second groove of the motor according to the embodiment.
FIG. 16 is a view illustrating a cogging torque waveform of a motor of a comparative example.
FIG. 17 is a view illustrating a cogging torque waveform of the motor in the case in which the second distance of the second groove is 1.9725 times the depth of the second groove of the motor according to the embodiment.

### [Modes of the Invention]

Hereinafter, exemplary embodiments of the present invention will be described in detail with reference to the accompanying drawings.

However, the technical spirit of the present invention is not limited to some embodiments which will be described and may be realized in a variety of different forms, and at least one component of the embodiments may be selectively coupled, substituted, and used to realize the technical spirit within the range of the technical spirit.

In addition, unless clearly and specifically defined otherwise by context, all terms (including technical and scientific terms) used herein can be interpreted as having customary meanings to those skilled in the art, and meanings of generally used terms, such as those defined in commonly used dictionaries, will be interpreted by considering contextual meanings of the related technology.

In addition, the terms used in the embodiments of the present invention are considered in a descriptive sense and not for limiting the present invention.

In the present specification, unless clearly indicated otherwise by the context, singular forms include the plural forms thereof, and in a case in which "at least one (or one or more) among A, B, and C" is described, this may include at least one combination among all possible combinations of A, B, and C.

In addition, in descriptions of components of the present invention, terms such as "first," "second," "A," "B," "(a)," and "(b)" can be used.

The terms are only to distinguish one element from another element, and an essence, order, and the like of the element are not limited by the terms.

In addition, it should be understood that, when an element is referred to as being "connected or coupled" to another element, such a description may include both of a case in which the element is directly connected or coupled to another element and a case in which the element is connected or coupled to another element with still another element disposed therebetween.

In addition, in a case in which any one element is described as being formed or disposed "on or under" another element, such a description includes both a case in which the two elements are formed or disposed in direct contact with each other and a case in which one or more other elements are interposed between the two elements. In addition, when one element is described as being disposed "on or under" another element, such a description may include a case in which the one element is disposed at an upper side or a lower side with respect to another element.

Hereinafter, example embodiments of the invention will be described in detail with reference to the accompanying drawings. Components that are the same or correspond to each other will be denoted by the same reference numerals regardless of the figure numbers, and redundant descriptions will be omitted.

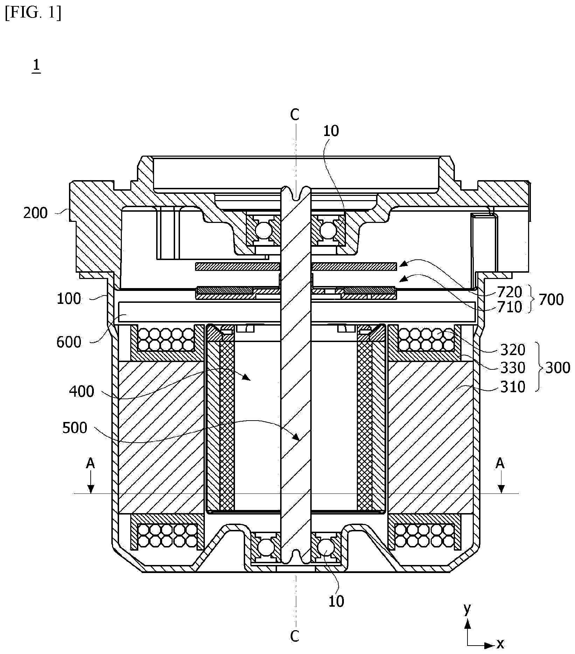

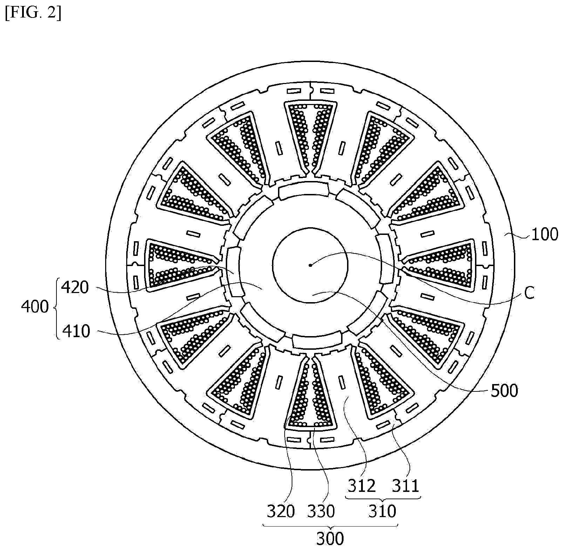

FIG. 1 is a view illustrating a motor according to an embodiment, and FIG. 2 is a cross-sectional view illustrating the motor according to the embodiment. In this case, FIG. 2 is a cross-sectional view taken along line A-A of FIG. 1. In FIG. 1, a y direction may denote an axial direction, and an x direction may denote a radial direction. In addition, the axial direction may be perpendicular to the radial direction. In addition, the axial direction may be a longitudinal direction of the shaft 500.

Referring to FIGS. 1 and 2, a motor 1 according to the embodiment may include a housing 100 in which an opening is formed at one side, a cover 200 disposed on the housing 100, a stator 300 disposed in the housing 100, a rotor 400 disposed inside the stator 300, a shaft 500 which rotates with the rotor 400, a busbar 600 disposed on the stator 300, and a sensor part 700 which detects rotation of the shaft 500. In this case, the term "inside" denotes a direction toward an axis C which is a center in the radial direction, and the term "outside" denotes a direction opposite to the term "inside."

The housing 100 and the cover 200 may form an exterior of the motor 1. In this case, the housing 100 may be formed in a cylindrical shape in which the opening is formed in an upper portion.

The cover 200 may be disposed to cover the open upper portion of the housing 100.

Accordingly, the housing 100 and the cover 200 may be coupled to form an accommodation space therein. In addition, as illustrated in FIG. 1, the stator 300, the rotor 400, the shaft 500, the busbar 600, the sensor part 700, and the like may be disposed in the accommodation space.

The housing 100 may be formed in the cylindrical shape. A pocket which accommodates a bearing 10 supporting a lower portion of the shaft 500 may be provided in a lower portion of the housing 100. In addition, a pocket which accommodates a bearing 10 supporting an upper portion of the shaft 500 may be provided in the cover 200 provided on the housing 100.

The stator 300 may be supported by an inner circumferential surface of the housing 100. In addition, the stator 300 may be disposed outside the rotor 400. That is, the rotor 400 may be disposed inside the stator 300.

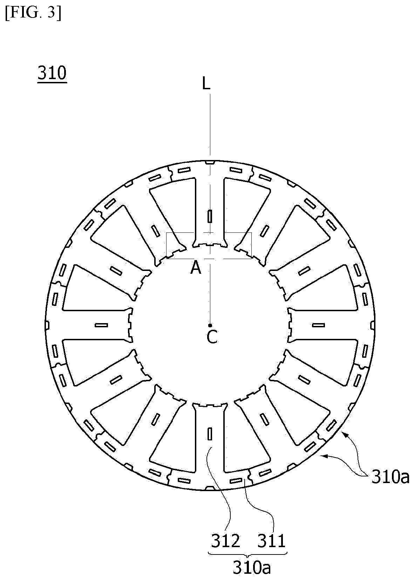

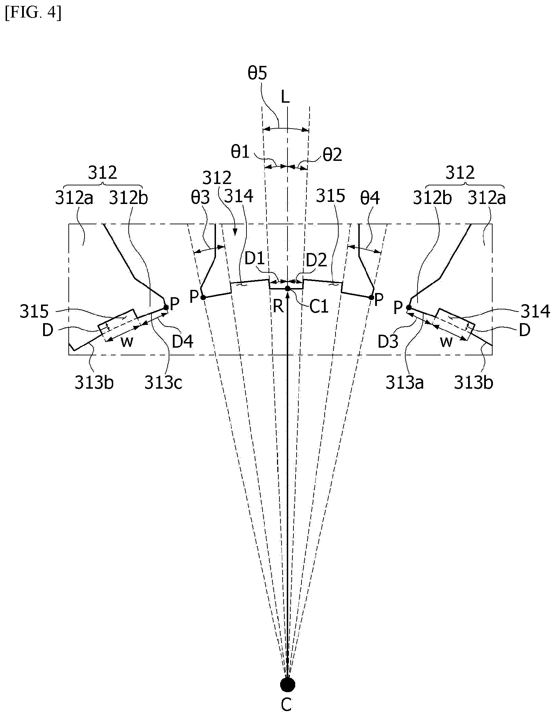

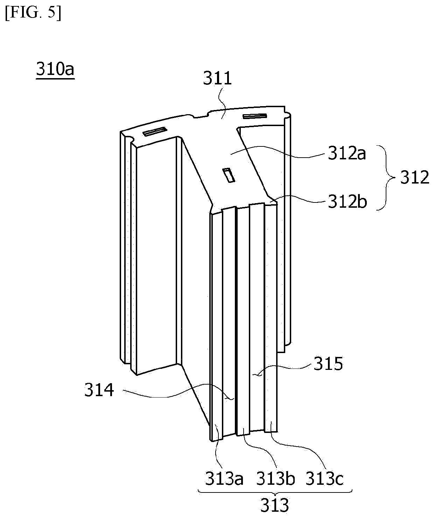

FIG. 3 is a view illustrating a stator core of the motor according to the embodiment, FIG. 4 is an enlarged view illustrating a region A of FIG. 3, and FIG. 5 is a view illustrating a unit stator core of the motor according to the embodiment.

Referring to FIGS. 1 to 4, the stator 300 may include a stator core 310, a coil 320 wound around the stator core 310, and an insulator 330 disposed between the stator core 310 and the coil 320.

The coil 320 which generates a rotating magnetic field may be wound around the stator core 310. In this case, the stator core 310 may be formed as one core. Alternatively, the stator core 310 may be formed by arranging a plurality of unit stator cores 310a illustrated in FIG. 5 in a circumferential direction.

In addition, the stator core 310 may be formed in the form in which a plurality of thin steel plates are stacked on each other but is not necessarily limited thereto. For example, the stator core 310 may also be formed as one single core.

The stator core 310 may include yokes 311, teeth 312 protruding from the yokes 311 in the radial direction, and first grooves 314 and second grooves 315 which are formed in inner surfaces 313 of the teeth 312. In this case, a separation distance from a center of the tooth 312 to the first groove 314 may be different from a separation distance from the center of the tooth 312 to the second groove 315 in the circumferential direction. Accordingly, the first groove 314 and second groove 315 may be asymmetrically disposed in the inner surface 313 of the tooth 312.

The yokes 311 of the stator core 310 may be formed in a cylindrical shape. In addition, the yoke 311 of the unit stator core 310a may be formed in an arc shape.

The tooth 312 may be disposed to protrude from the yoke 311 in the radial direction (x direction) about the axis C. In addition, the plurality of the teeth 312 may be disposed to be spaced apart from each other on inner circumferential surfaces of the yokes 311 of the stator core 310 in the circumferential direction. Accordingly, slots, which are spaces allowing the coil 320 to be wound, may be formed between the teeth 312. In this case, the teeth 312 may be provided as 12 teeth 312 but are not necessarily limited thereto.

Meanwhile, the teeth 312 may be disposed to face magnets 420 of the rotor 400. In this case, the inner surface 313 of the tooth 312 is disposed to be spaced apart from an outer circumferential surface of the magnet 420 by a predetermined distance in the radial direction. In this case, the inner surface 313 may be formed to have a predetermined curvature 1/R about the axis C of the motor 1. Accordingly, a length of the inner surface 313 of the tooth 312 may be calculated through a formula for calculating a length of an arc.

The coil 320 is wound around each of the teeth 312.

The tooth 312 may include a body 312a around which the coil 320 is wound and a protrusion 312b disposed on an inner end portion of the body 312a. In this case, the protrusion 312b may be referred to as a shoe.

The bodies 312a may be disposed to protrude from the yokes 311 in the radial direction (x direction) about the axis C. In addition, the bodies 312a may be disposed to be spaced apart from each other on the inner circumferential surfaces of the yokes 311 in the circumferential direction.

In addition, the coil 320 may be wound around the body 312a.

The protrusion 312b may extend to protrude inward from an end portion of the body 312a. In this case, a width of the protrusion 312b in the circumferential direction may be greater than a width of the body 312a in the circumferential direction.

Since the protrusions 312b are disposed to be spaced apart from each other in the circumferential direction, open portions may be formed inside the slots. In this case, the open portions denote slot opens. For example, among the plurality of teeth 312, the slot open may denote a space between one end of the protrusion 312b of one tooth 312 and the other end of the protrusion 312b of another tooth 312 adjacent to the one tooth 312.

Accordingly, the slot open may denote a space between an end point P of any one protrusion 312b and an end point P of another protrusion 312b disposed adjacent to the any one protrusion 312b, and the slot open may be disposed to have a predetermined distance. In this case, the distance of the slot open may be referred to as a distance between the protrusions 312b or a width of the slot open.

The inner surface 313 of the tooth 312 may be formed to have the predetermined curvature 1/R about the axis C of the motor 1. In this case, the inner surface 313 of the tooth 312 may be an inner surface 313 of the protrusion 312b.

Since the first groove 314 and the second groove 315 are formed to be spaced apart from each other in the circumferential direction, the inner surface 313 may include a first inner surface 313a, a second inner surface 313b, and a third inner surface 313c which are disposed in the clockwise direction.

The first groove 314 and the second groove 315 may be concavely formed in the inner surface 313 in the radial direction. In addition, the first groove 314 and the second groove 315 may be disposed in the inner surface 313 to be spaced apart from each other in the circumferential direction. As illustrated in FIG. 5, the first groove 314 and the second groove 315 may be formed to extend from an upper end to a lower end of the inner surface 313 in the axial direction of the shaft 500.

Referring to FIG. 4, the separation distance from a virtual line L, which connects the center of the tooth 312 in the circumferential direction and the axis C, to the first groove 314 may be different from the separation distance from the virtual line L to the second groove 315. In this case, the center of the tooth 312 in the circumferential direction may be a center C1 of the inner surface 313. Accordingly, the center C1 of the inner surface 313 may be disposed on the line L.

Accordingly, a first distance D1 from the virtual line L, which connects the center C1 of the inner surface 313 of the tooth 312 and the axis C of the shaft 500, to one side of the first groove 314 may be different from a second distance D2 from the line L to the other side of the second groove 315. In this case, the first distance D1 may be greater or smaller than the second distance D2 in consideration of a cogging torque of the motor 1. Accordingly, a layout of the first groove 314 and the second groove 315 may be asymmetrical with respect to the center of the tooth 312 in the circumferential direction.

That is, about the axis C of the shaft 500, a first angle θ1 formed by the virtual line L, which connects the center C1 of the inner surface 313 of the tooth 312 and the axis C of the shaft 500, and the inner surface 313 of the tooth 312 at which one side of the first groove 314 is formed may be different from a second angle θ2 formed by the line L and the inner surface 313 of the tooth 312 at which the other side of the second groove 315 is formed.

When the first groove 314 and the second groove 315 are described, a side in the clockwise direction may be referred to one side and a side in the counterclockwise direction may be referred to the other side in the circumferential direction. For example, the first angle θ1 may correspond to the distance from the line L to one side of the first groove 314, and the second angle θ2 may correspond to the distance from the line L to the other side of the second groove 315. In this case, the axis C of the shaft 500 may be the same as a center of the stator core 310. In addition, the inner surface 313 corresponding to the first angle θ1 and the second angle θ2 may be the second inner surface 313b.

In addition, about the axis of the shaft 500, a fifth angle θ5 formed by one side of the first groove 314 and the inner surface 313 of the tooth 312 at which the other side of the second groove 315 is formed may be different from a third angle θ3 formed by the other side of the first groove 314 and the inner surface 313 of the tooth 312 at which the other side of the tooth 312 is formed and a fourth angle θ4 formed by one side of the second groove 315 and the inner surface 313 of the tooth 312 at which one side of the inner surface 313 of the tooth 312 is formed.

In this case, the fourth angle θ4 formed by one side of the inner surface 313 of the tooth 312 and the inner surface 313 of the tooth 312 at which one side of the second groove 315 is formed may be two times the second angle θ2.

In addition, the fifth angle θ5 may be formed by the one side and the other side of the second inner surface 313b in the circumferential direction about the axis C. In this case, the fifth angle θ5 may be the first angle θ1 and second angle θ2. Accordingly, the fifth angle θ5 may be the sum of the first angle θ1 formed by the virtual line L, which connects the center C1 of the inner surface 313 of the tooth 312 and the axis C of the shaft 500, and the inner surface 313 of the tooth 312 at which one side of the first groove 314 is formed and the second angle θ2 formed by the line L and the inner surface 313 of the tooth 312 at which the other side of the second groove 315 is formed. In this case, the first angle θ1 and the second angle θ2 may be different from each other.

In addition, the third angle θ3 may be formed by one side and the other side of the first inner surface 313a in the circumferential direction about the axis C. In addition, the fourth angle θ4 may be formed by one side and the other side of the third inner surface 313c in the circumferential direction about the axis C.

In addition, the third angle θ3 and the fourth angle θ4 may be different from each other.

In addition, since the first distance D1 which is the separation distance by which the first groove 314 is spaced apart from the line L is greater or smaller than the second distance D2 which is the separation distance by which the second groove 315 is spaced apart from the line L, the fifth angle θ5 may be greater or smaller than the fourth angle θ4. For example, in a case in which the fifth angle θ5 is greater than the fourth angle θ4, the fourth angle θ4 may be greater than the third angle θ3. In addition, in a case in which the fifth angle θ5 is smaller than the fourth angle θ4, the fourth angle θ4 may be smaller than the third angle θ3.

Accordingly, a third distance D3 from the other side of the inner surface 313 of the tooth 312 to the first groove 314 is different from a fourth distance D4 from one side of the inner surface 313 of the tooth 312 to the second groove 315.

Meanwhile, a size of the first groove 314 may be the same as a size of the second groove 315. For example, a depth D in the radial direction and a width W in the circumferential direction of the first groove 314 may be the same as those of the second groove 315, and the first groove 314 and the second groove 315 may be formed to have rectangularly-shaped horizontal cross-sections.

In this case, when the width W of the first groove 314 in the circumferential direction is 1, a ratio of the depth D to the width W of the first groove 314 in the circumferential direction may be in the range of 0.24 to 0.29. That is, the depth D of the first groove 314 may be 0.24 to 0.29 times the width W of the first groove 314.

In addition, the second distance D2 from the virtual line L, which connects the center C1 of the inner surface 313 of the tooth 312 and the axis C of the shaft 500, to the other side of the second groove 315 may be 1.315 to 1.9725 times the depth D of the second groove 315. Specifically, the second distance D2 of the second groove 315 may be 1.315 to 1.578 times the depth D in consideration of the cogging torque of the motor 1.

The first groove 314 and the second groove 315 of the motor 1 may be formed in the inner surface 313 of the tooth 312 to be asymmetrical with respect to the line L, and the cogging torque may be decreased due to the first distance D1 by which the first groove 314 is spaced apart from the line L.

That is, the cogging torque of the motor 1 may be decreased by designing the first distance D1 which is the separation distance from the first groove 314 to the line L to be different from the second distance D2 which is the separation distance from the second groove 315 to the line L. In this case, the fourth distance D4 from one side of the inner surface 313 of the tooth 312 to the second groove 315 may be two times the second distance D2.

Accordingly, about the axis C of the shaft 500, the first angle θ1 and the second angle θ2 may be different from each other.

Accordingly, the cogging torque of the motor 1 may be decreased by providing the second angle θ2 as a design reference value and forming the first angle θ1 to be different from the second angle θ2 on the basis of the design reference value. In this case, the fourth angle θ4 may be two times the second angle θ2.

For example, the cogging torque of the motor 1 may be decreased by proposing the depth D of the groove in relation to the second distance D2 or the second angle θ2 of the second groove 315 to be disposed to be spaced apart from the center C1 of the inner surface 313 of the tooth 312 and setting the first distance D1 or the first angle θ1 on the basis of the depth D of the groove.

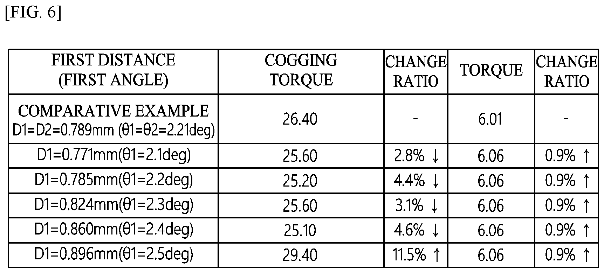

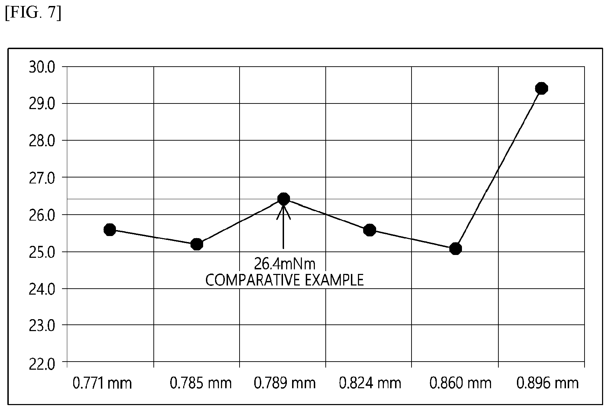

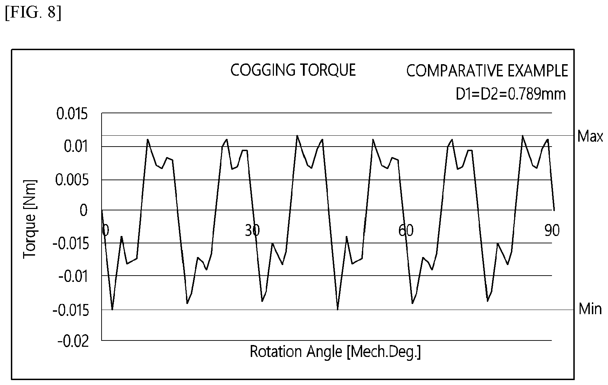

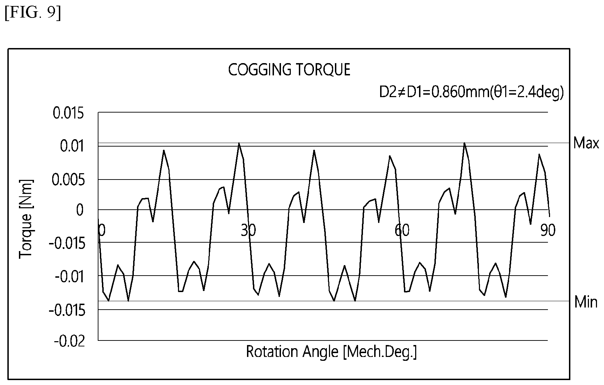

FIG. 6 is a table showing the cogging torque of the motor and a change in the torque in a case in which the second distance of the second groove is 1.578 times the depth of the second groove of the motor according to the embodiment, FIG. 7 is a graph showing the cogging torque of the motor in the case in which the second distance of the second groove is 1.578 times the depth of the second groove of the motor according to the embodiment, FIG. 8 is a view illustrating a cogging torque waveform of a motor of a comparative example, and FIG. 9 is a view illustrating a cogging torque waveform of the motor when the first angle is 2.4 deg in the case in which the second distance of the second groove is 1.578 times the depth of the second groove of the motor according to the embodiment. Here, in the case of the motor illustrated as the comparative example, a first angle θ2 of a first groove 314 is the same as a second angle θ2 of a second groove 315. In addition, in the motor 1, the second distance D2 of the second groove 315 may be 1.578 times the depth D of the second groove 315. For example, when the second distance D2 of the second groove 315 is 0.789 mm, the depth D of the second groove 315 may be 0.5 mm. In this case, the depth of the first groove 314 is the same as the depth of the second groove 315.

In the motor 1, the first angle θ1 may be formed to be greater or smaller than the second angle θ2.

Referring to FIGS. 6 and 7, a difference between the first angle θ1 and the second angle θ2 may be within 10% of the second angle θ2. Specifically, the first angle θ1 may be the sum of the second angle θ2 and an angle which is within 10% of the second angle θ2 (θ1=θ2+K1, K1≤θ2^{∗}10%), or the first angle θ1 may be a difference between the second angle θ2 and an angle which is within 5% of the second angle θ2 (θ1=θ2-K2, K2≤θ2^{∗}5%).

Accordingly, the fourth angle θ4 may be the sum of the third angle θ3 and an angle which is within 10% of the second angle θ2 (θ4=θ3+K1, K1≤θ2^{∗}10%), or the fourth angle θ4 may be a difference between the third angle θ3 and an angle which is 5% of the second angle θ2 (θ4=θ3-K2, K2≤θ2^{∗}5%). Accordingly, a difference between the fourth angle θ4 and the third angle θ3 may be within 5% of the fourth angle θ4.

Alternatively, in the motor 1, the first distance D1 may be greater or smaller than the second distance D2. Specifically, the first distance D1 may be the sum of the second distance D2 and a distance which is within 10% of the second distance D2 (D1=D2+K1, K1≤D2^{∗}10%), or the first distance D1 may be a difference between the second distance D2 and a distance which is within 5% of the second distance D2 (D1=D2-K2, K2≤D2^{∗}5%).

Referring to FIGS. 6 and 7, in the motor 1 according to the embodiment, the cogging torque can be decreased by a maximum of 4.6% (θ1=2.4 deg) when compared to the motor of the comparative example.

In a case in which the first angle θ1 is greater than the second angle θ2, it can be seen that the cogging torque of the motor 1 decreased until the first angle θ1 is 2.4 deg and then increased. In addition, in a case in which the first angle θ1 is smaller than the second angle θ2, it can be seen that the cogging torque of the motor 1 decreased until the first angle θ1 is 2.1 deg and then increased. In this case, a change in the amount of the torque of the motor 1 according to the embodiment is insignificant when compared to a torque value of 6.01 Nm which is a result of the motor of the comparative example.

Accordingly, in a case in which the first angle θ1 is formed to be 8.6% greater than the second angle θ2, the cogging torque the motor 1 has a minimum value. In addition, in a case in which the first angle θ1 is formed to be 5% smaller than the second angle θ2, the cogging torque of the motor 1 has a second smallest value.

Referring to pulsations (repeating torque waveforms) illustrated in FIGS. 8 and 9, it can be seen that an amplitude between a maximum value and a minimum value of the cogging torque of the motor 1 is smaller than an amplitude between a maximum value and a minimum value of the cogging torque of the motor of the comparative example. Accordingly, it can be seen that the cogging torque of the motor 1 decreased.

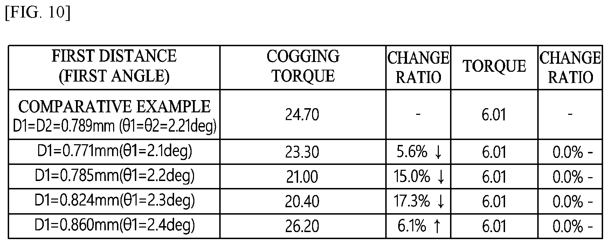

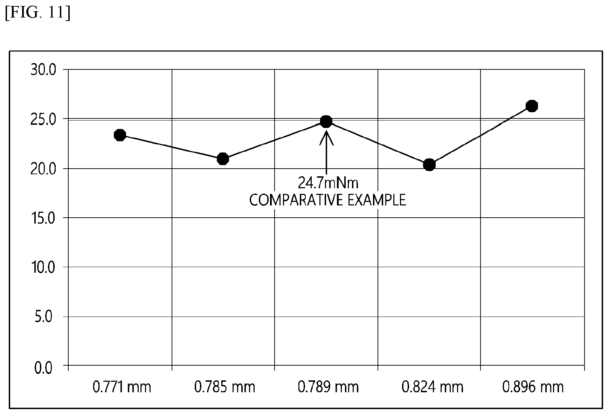

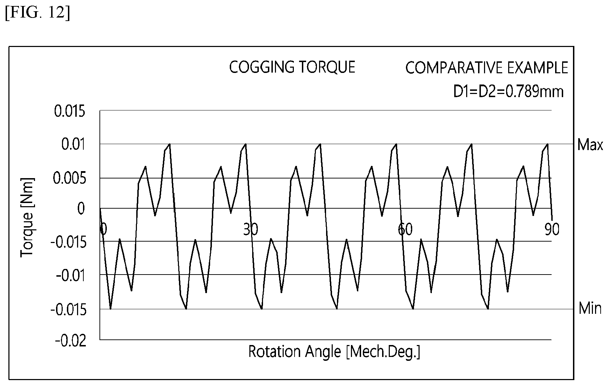

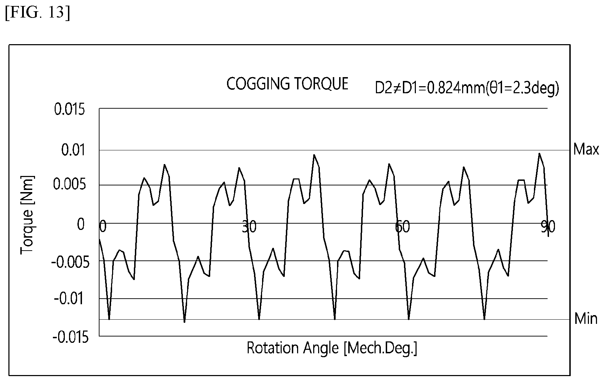

FIG. 10 is a table showing a cogging torque of the motor and a change in the torque in a case in which the second distance of the second groove is 1.315 times the depth of the second groove of the motor according to the embodiment, FIG. 11 is a graph showing the cogging torque of the motor in the case in which the second distance of the second groove is 1.315 times the depth of the second groove of the motor according to the embodiment, FIG. 12 is a view illustrating a cogging torque waveform of a motor of a comparative example, and FIG. 13 is a view illustrating a cogging torque waveform of the motor when the first angle is 2.3 deg in the case in which the second distance of the second groove is 1.315 times the depth of the second groove of the motor according to the embodiment. In the case of the motor illustrated as the comparative example, a first angle θ2 of a first groove 314 is the same as a second angle θ2 of a second groove 315. In addition, in the motor 1, the second distance D2 of the second groove 315 may be 1.315 times the depth D of the second groove 315. For example, when the second distance D2 of the second groove 315 is 0.789 mm, the depth D of the second groove 315 may be 0.6 mm. In this case, the depth of the first groove 314 is the same as the depth of the second groove 315.

In the motor 1, the first angle θ1 may be formed to be greater or smaller than the second angle θ2.

Referring to FIGS. 10 and 11, a difference between the first angle θ1 and the second angle θ2 may be within 5% of the second angle θ2. Specifically, the first angle θ1 may be the sum of the second angle θ2 and an angle which is within 4% of the second angle θ2 (θ1=θ2+K1, K1≤θ2^{∗}4%), or the first angle θ1 may be a difference between the second angle θ2 and an angle which is within 5% of the second angle θ2 (θ1=θ2-K2, K2≤θ2^{∗}5%).

Accordingly, the fourth angle θ4 may be the sum of the third angle θ3 and an angle which is within 4% of the second angle θ2 (θ4=θ3+K1, K1≤θ2^{∗}4%), or the fourth angle θ4 may be a difference between the third angle θ3 and an angle which is within 5% of the second angle θ2 (θ4=θ3-K2, K2≤θ2^{∗}5%).

Accordingly, a difference between the fourth angle θ4 and the third angle θ3 may be within 2.5% of the fourth angle θ4.

Alternatively, in the motor 1, the first distance D1 may be formed to be greater or smaller than the second distance D2. Specifically, the first distance D1 may be the sum of the second distance D2 and a distance which is within 4% of the second distance D2 (D1=D2+K1, K1≤D2^{∗}4%), or the first distance D1 may be a difference (D1=D2-K2, K2≤D2^{∗}5%) between the second distance D2 and a distance which is within 5% of the second distance D2.

Referring to FIGS. 10 and 11, in the motor 1 according to the embodiment, the cogging torque can be decreased by a maximum of 17.3% (θ1=2.3 deg) when compared to the motor of the comparative example.

In a case in which the first angle θ1 is greater than the second angle θ2, it can be seen that the cogging torque of the motor 1 decreased until the first angle θ1 is 2.3 deg and then increased. In addition, in a case in which the first angle θ1 is smaller than the second angle θ2, it can be seen that the cogging torque of the motor 1 decreased until the first angle θ1 is 2.2 deg and then increased. In this case, it can be seen that there is no amount change in the torque of the motor 1 according to the embodiment when compared to a torque value of 6.01 Nm which is a result of the motor of the comparative example.

Accordingly, in a case in which the first angle θ1 is formed to be 4% greater than the second angle θ2, the cogging torque of the motor 1 has a minimum value. In addition, in a case in which the first angle θ1 is formed to be 0.5% smaller than the second angle θ2, the cogging torque of the motor 1 has a second smallest value.

Referring to pulsations (repeating torque waveforms) illustrated in FIGS. 12 and 13, it can be seen that an amplitude between a maximum value and a minimum value of the cogging torque of the motor 1 is smaller than an amplitude between a maximum value and a minimum value of the cogging torque of the motor of the comparative example. Accordingly, it can be seen that the cogging torque of the motor 1 decreases.

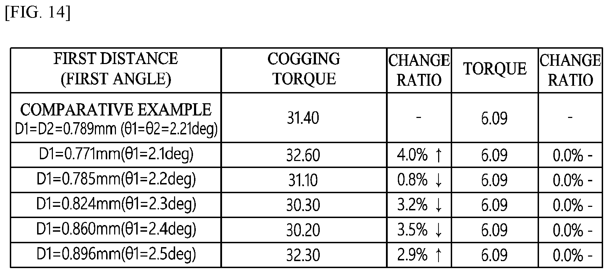

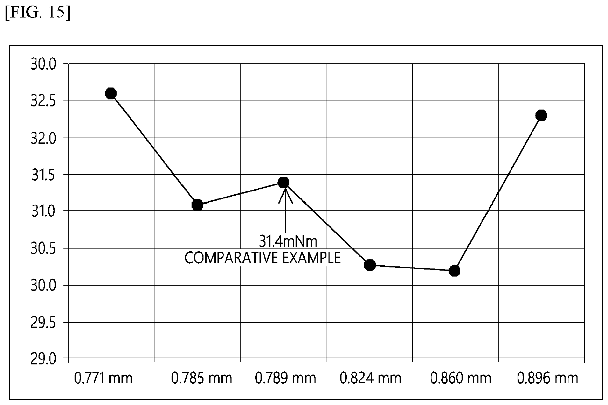

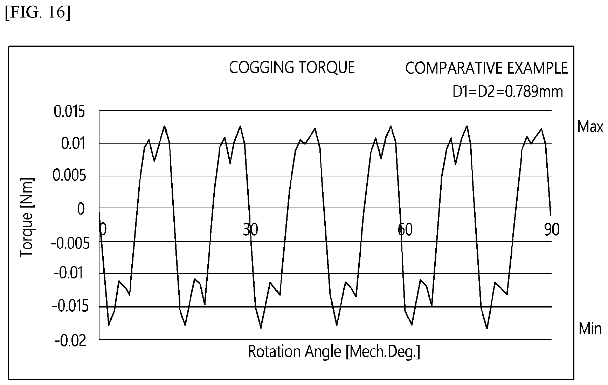

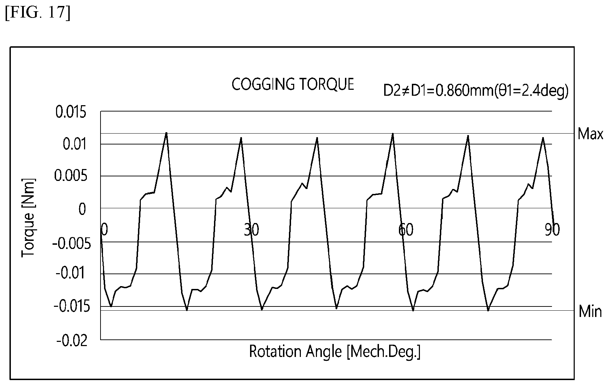

FIG. 14 is a table showing a cogging torque of the motor and a change in the torque in a case in which the second distance of the second groove is 1.9725 times the depth of the second groove of the motor according to the embodiment, FIG. 15 is a graph showing the cogging torque of the motor in the case in which the second distance of the second groove is 1.9725 times the depth of the second groove of the motor according to the embodiment, FIG. 16 is a view illustrating a cogging torque waveform of a motor of a comparative example, FIG. 17 is a view illustrating a cogging torque waveform of the motor when the first angle is 2.4 deg in the case in which the second distance of the second groove is 1.9725 times the depth of the second groove of the motor according to the embodiment. In the case of the motor illustrated as the comparative example, a first angle θ2 of a first groove 314 is the same as a second angle θ2 of a second groove 315. In addition, in the motor 1, the second distance D2 of the second groove 315 may be 1.9725 times the depth D of the second groove 315. For example, when the second distance D2 of the second groove 315 is 0.789 mm, the depth D of the second groove 315 may be 0.6 mm. In this case, the depth of first groove 314 is the same as the depth of the second groove 315.

In the motor 1, the first angle θ1 may be formed to be greater or smaller than the second angle θ2.

Referring to FIGS. 14 and 15, a difference between the first angle θ1 and the second angle θ2 may be within 10% of the second angle θ2. Specifically, the first angle θ1 may be the sum of the second angle θ2 and an angle which is within 10% of the second angle θ2 (θ1=θ2+K1, K1≤θ2^{∗}10%), or the first angle θ1 may be a difference between the second angle θ2 and an angle which is within 0.5% of the second angle θ2 (θ1=θ2-K2, K2≤θ2^{∗}0.5%).

Alternatively, in the motor 1, the first distance D1 may be formed to be greater or smaller than the second distance D2. Specifically, the first distance D1 may be the sum of the second distance D2 and a distance which is within 10% of the second distance D2 (D1=D2+K1, K1≤D2^{∗}10%), or the first distance D1 may be a difference between the second distance D2 and a distance which is within 0.5% of the second distance D2 (D1=D2-K2, K2≤D2^{∗}0.5%).

Referring to FIGS. 14 and 15, in the motor 1 according to the embodiment, the cogging torque can be decreased by a maximum of 3.5% (θ1=2.4 deg) when compared to the motor of the comparative example.

In a case in which the first angle θ1 is greater than the second angle θ2, it can be seen that the cogging torque of the motor 1 decreased until the first angle θ1 is 2.4 deg and then increased. In addition, in a case in which the first angle θ1 is smaller than the second angle θ2, it can be seen that the cogging torque of the motor 1 decreased until the first angle θ1 is 2.2 deg and then increased. In this case, it can be seen that there is no amount change in the torque of the motor 1 according to the embodiment when compared to a torque value of 6.09 Nm which is a result of the motor of the comparative example.

Accordingly, in a case in which the first angle θ1 is formed to be 8.6% greater than the second angle θ2, the cogging torque of the motor 1 has a minimum value.

Referring to pulsations (repeating torque waveforms) illustrated in FIGS. 16 and 17, it can be seen that an amplitude between a maximum value and a minimum value of the cogging torque of the motor 1 is greater than an amplitude between a maximum value and a minimum value of the cogging torque of the motor of the comparative example. Accordingly, it can be seen that the cogging torque of the motor 1 decreases.

The insulator 330 insulates the stator core 310 from the coil 320. Accordingly, the insulator 330 may be disposed between the stator core 310 and the coil 320.

Accordingly, the coil 320 may be wound around the tooth 312 of the stator core 310 on which the insulator 330 is disposed.

The rotor 400 may be disposed inside the stator 300. In addition, the rotor 400 may include a hole, into which the shaft 500 is inserted, in a central portion. Accordingly, the shaft 500 may be coupled to the hole of the rotor 400.

Referring to FIG. 2, the rotor 400 may include a rotor core 410 and the magnets 420 disposed on an outer circumferential surface of the rotor core 410. In this case, the magnets 420 may be provided as eight magnets but are not necessarily limited thereto.

As illustrated in FIG. 2, the rotor 400 may be formed in a type in which the magnets 420 are coupled to the outer circumferential surface of the rotor core 410. In the rotor 400 formed in such a type, an additional can member (not shown) may be coupled to the rotor core 410 in order to prevent separation of the magnets 420 and increase a coupling force. Alternatively, the magnets 420 and the rotor core 410 may be integrally formed through a double-injection molding process.

Alternatively, the rotor 400 may be formed in a type in which the magnets 420 are coupled to an inner portion of the rotor core 410. In the rotor 400 formed in such a type, a pocket into which the magnet 420 is inserted may be provided in the rotor core 410.

The rotor core 410 may be formed in the form in which a plurality of thin steel plates are stacked on each other. However, the rotor core 410 may also be manufactured in the form of a single core including one cylinder.

In addition, the rotor core 410 may be formed in the form in which a plurality of pucks (unit core) forming a skew angle are stacked.

Meanwhile, the rotor core 410 may include a hole into which the shaft 500 is inserted.

The shaft 500 is coupled to the rotor 400. When an electromagnetic interaction occurs between the rotor 400 and the stator 300 by supplying a current, the rotor 400 rotates, and the shaft 500 rotates in conjunction with the rotation of the rotor 400. In this case, the shaft 500 may be supported by the bearing 10.

As illustrated in FIG. 1, the shaft 500 may be rotatably supported by the bearings 10 in the housing 100 and the cover 200.

The shaft 500 may be connected to a steering shaft of a vehicle. Accordingly, due to rotation of the shaft 500, the steering shaft may receive power.

The busbar 600 may be disposed on the stator 300.

In addition, the busbar 600 may be electrically connected to the coil 320 of the stator 300.

The busbar 600 may include a busbar body (not shown) and a plurality of terminals (not shown) disposed on the busbar body.

The busbar body may be a mold part having a ring shape formed through an injection molding process. In addition, the terminal may be disposed on the busbar body through an insert-injection molding process. In this case, the terminal may be electrically connected to the coil 320 of the stator 300.

The sensor part 700 may detect a magnetic force of a sensing magnet installed to be rotatable in conjunction with the rotor 400 to check a present position of the rotor 400. Accordingly, the sensor part 700 may detect rotation of the shaft 500.

The sensor part 700 may include a sensing magnet assembly 710 and a printed circuit board (PCB) 720.

The sensing magnet assembly 710 is coupled to the shaft 500 to operate in conjunction with the rotor 400 so as to detect the position of the rotor 400. In this case, the sensing magnet assembly 710 may include sensing magnets and a sensing plate. The sensing magnets and the sensing plate may be coaxially coupled.

The sensing magnets may include main magnets disposed close to a hole forming an inner circumferential surface thereof in the circumferential direction and sub-magnets formed at an edge of the main magnets. In this case, the main magnets may be arranged like drive magnets inserted into the rotor 400 of the motor. In addition, the sub-magnets may be divided further than the main magnets so that the sub-magnets may be formed to have poles of which the number is greater than the number of poles of the main magnets. Accordingly, a rotation angle may be divided and measured more precisely, and thus the motor may be driven more smoothly.

The sensing plate may be formed of a metal material having a disc shape. The sensing magnet may be coupled to an upper surface of the sensing plate. In addition, the sensing plate may be coupled to the shaft 500. In this case, a hole through which the shaft 500 passes may be formed in the sensing plate.

A sensor configured to detect a magnetic force of the sensing magnets may be disposed on the PCB 720. In this case, a Hall integrated circuit (IC) may be provided as the sensor. In addition, the sensor may detect changes in an N-pole and an S-pole of the sensing magnet to generate a sensing signal.

While the invention has been shown and described with reference to the exemplary embodiments thereof, it will be understood by those skilled in the art that the present invention may be variously changed and modified without departing from the spirit and scope of the invention as defined by the appended claims.

**[Reference Numerals]**

| | | | |
|---|---|---|---|
| 1: | MOTOR | 100: | HOUSING |
| 200: | COVER | 300: | STATOR |
| 310: | STATOR CORE | 311: | YOKE |
| 312: | TOOTH | 313: | INNER SURFACE |
| 314: | FIRST GROOVE | 315: | SECOND GROOVE |
| 320: | COIL | 400: | ROTOR |
| 410: | ROTOR CORE | 420: | MAGNET |
| 500: | SHAFT | 600: | BUSBAR |
| 700: | SENSOR PART | | |

## Claims

1. A motor comprising:
a shaft;
a rotor to which the shaft is coupled; and
a stator disposed outside the rotor,
wherein the stator includes a stator core and a coil wound around the stator core,
the stator core includes a yoke, a tooth formed to protrude from the yoke, and a first groove and a second groove which are formed in an inner surface of the tooth, and
a separation distance from a center of the tooth in a circumferential direction to the first groove and a separation distance from the center of the tooth to the second groove are different from each other.

2. The motor of claim 1, wherein, about an axis of the shaft, a first angle (θ1) formed by a virtual line (L), which connects a center of the inner surface of the tooth and the axis of the shaft, and the inner surface of the tooth at which one side of the first groove is formed is different from a second angle (θ2) formed by the line (L) and the inner surface of the tooth at which the other side of the second groove is formed.

3. The motor of claim 2, wherein the first groove and the second groove are formed in an axial direction of the shaft.

4. The motor of claim 2, wherein, about the axis of the shaft, a fourth angle (θ4) formed by one side of the inner surface of the tooth and the inner surface of the tooth at which one side of the second groove is formed is two times the second angle (θ2).

5. The motor of claim 2, wherein:
a second distance (D2) from the virtual line (L), which connects the center of the inner surface of the tooth and the axis of the shaft, to the other side of the second groove is 1.578 times a depth (D) of the second groove; and
a difference between the first angle (θ1) and the second angle (θ2) is within 10% of the second angle (θ2).

6. The motor of claim 5, wherein:
the first angle (θ1) is a sum of the second angle (θ2) and an angle which is within 10% of the second angle (θ2); or
the first angle (θ1) is a difference between the second angle (θ2) and an angle which is within 5% of the second angle (θ2).

7. The motor of claim 2, wherein:
a second distance (D2) from the virtual line (L), which connects the center of the inner surface of the tooth and the axis of the shaft, to the other side of the second groove is 1.315 times a depth (D) of the second groove; and
a difference between the first angle (θ1) and the second angle (θ2) is within 5% of the second angle (θ2).

8. The motor of claim 7, wherein:
the first angle (θ1) is a sum of the second angle (θ2) and an angle which is within 4% of the second angle (θ2); or
the first angle (θ1) is a difference between the second angle (θ2) and an angle which is within 5% of the second angle (θ2).

9. A motor comprising:
a shaft;
a rotor to which the shaft is coupled; and
a stator disposed outside the rotor,
wherein the stator includes a stator core and a coil wound around the stator core,
the stator core includes a yoke, a tooth formed to protrude from the yoke, and a first groove and a second groove which are formed in an inner surface of the tooth, and
about an axis of the shaft, a fifth angle (θ5) formed by one side of the first groove and the inner surface of the tooth at which the other side of the second groove is formed is different from a third angle (θ3) formed by the other side of the first groove and the inner surface of the tooth at which the other side of the tooth is formed and a fourth angle (θ4) formed by one side of the second groove and the inner surface of the tooth at which one side of the inner surface of the tooth is formed.

10. The motor of claim 9, wherein the third angle (θ3) and the fourth angle (θ4) are different from each other.

11. The motor of claim 10, wherein the fifth angle (θ5) is greater or smaller than the fourth angle (θ4).

12. The motor of claim 11, wherein:
in a case in which the fifth angle (θ5) is greater than the fourth angle (θ4), the fourth angle (θ4) is greater than the third angle (θ3); and
in a case in which the fifth angle (θ5) is smaller than the fourth angle (θ4), the fourth angle (θ4) is smaller than the third angle (θ3).

13. The motor of claim 9, wherein the fifth angle (θ5) is a sum of a first angle (θ1) formed by a virtual line (L), which connects a center of the inner surface of the tooth and the axis of the shaft, and the inner surface of the tooth at which the one side of the first groove is formed and a second angle (θ2) formed by the line (L) and the inner surface of the tooth at which the other side of the second groove is formed.

14. The motor of claim 13, wherein the first angle (θ1) and the second angle (θ2) are different from each other.

15. The motor of claim 13, wherein:
a second distance (D2) from the virtual line (L), which connects the center of the inner surface of the tooth and the axis of the shaft, to the other side of the second groove is 1.578 times a depth (D) of the second groove; and
the fourth angle (θ4) is a sum of the third angle (θ3) and an angle which is within 10% of the second angle (θ2); or
the fourth angle (θ4) is a difference between the third angle (θ3) and an angle which is within 5% of the second angle (θ2).

16. The motor of claim 13, wherein:
a second distance (D2) from the virtual line (L), which connects the center of the inner surface of the tooth and the axis of the shaft, to the other side of the second groove is 1.315 times a depth (D) of the second groove; and
the fourth angle (θ4) is a sum of the third angle (θ3) and an angle which is within 4% of the second angle (θ2); or
the fourth angle (θ4) is a difference between the third angle (θ3) and an angle which is within 5% of the second angle (θ2).

17. The motor of claim 9, wherein:
a second distance (D2) from a virtual line (L), which connects a center of the inner surface of the tooth and the axis of the shaft, to the other side of the second groove is 1.578 times a depth (D) of the second groove; and
a difference between the fourth angle (θ4) and the third angle (θ3) is within 5% of the fourth angle (θ4).

18. The motor of claim 14, wherein:
a second distance (D2) from the virtual line (L), which connects the center of the inner surface of the tooth and the axis of the shaft, to the other side of the second groove is 1.315 times a depth (D) of the second groove; and
a difference between the fourth angle (θ4) and the third angle (θ3) is within 2.5% of the fourth angle (θ4).

19. The motor of claim 1 or 9, wherein a size of the first groove is the same as a size of the second groove.

20. The motor of claim 19, wherein a ratio of a depth (D) to a width (W) of the first groove in a circumferential direction is in a range of 0.24 to 0.29.

21. The motor of claim 19, wherein a third distance (D3) from the other side of the inner surface of the tooth to the first groove is different from a fourth distance (D4) from the one side of the inner surface of the tooth to the second groove.

22. The motor of claim 1 or 9, wherein the inner surface is formed to have a predetermined curvature 1/R about an axis.

23. The motor of claim 1 or 9, wherein:
a magnet of the rotor is provided as eight magnets; and
the tooth of the stator is provided as 12 teeth.

24. The motor of claim 1 or 9, wherein a second distance (D2) from a virtual line (L), which connects a center of the inner surface of the tooth and an axis of the shaft, to the other side of the second groove is 1.315 to 1.9725 times a depth (D) of the second groove.
